# EUROPEAN PATENT APPLICATION

(11) **EP 1 321 322 A1**
(43) Date of publication of application: **25.06.2003**
(21) Application number: 01130758.4
(22) Date of filing: 21.12.2001
(51) Int. Cl.: B60H 1/00

(54) **Vehicle with heat exchanger unit arranged near the passenger compartment**

(71) Applicant: DENSO THERMAL SYSTEMS S.p.A., 10046 Poirino (Torino) (IT)
(72) Inventor: Molari, Aurelio, 10025 Pino Torinese (Torino) (IT); Vitali, Domenico, 10023 Chieri (Torino) (IT)
(74) Representative: Marchitelli, Mauro

(57) **Abstract**

Motor vehicle comprising a passenger compartment (12), a front compartment (14), which is arranged in the front of the passenger compartment (12), and a heat exchanger unit (16), comprising an engine cooling radiator arranged in the area separating the passenger compartment (12) from the front compartment (14). The motor vehicle comprises a manifold for conveying a flow of air (22), with an air flow inlet section (28) arranged in the front part of the motor vehicle and an air flow outlet section (30) arranged in the rear part of the front compartment (14), in correspondence to said heat exchanger unit (16).

## Description

This invention relates to a motor vehicle comprising a passenger compartment, a front compartment, which is arranged in the front of the passenger compartment, and a heat exchanger unit, comprising an engine cooling radiator arranged in the area separating the passenger compartment from the front compartment.

A heat exchanger unit for motor vehicles comprising the components of a cooling system for an internal combustion engine and the components of a system for treating the flow of air destined to be conveyed into the passenger compartment of the vehicle is described in Italian patent application no. T099A000124 (not published at the date of filing of this application). The heat exchanger unit forms a pre-assembled unit, which is destined to be fitted between the engine and the passenger compartment of a motor vehicle.

The purpose of this invention is to provide methods for improving the efficiency of a heat exchanger in a motor vehicle equipped with a head exchanger unit which is arranged in the area separating the passenger compartment from the front compartment.

According to this invention, this purpose is attained by a motor vehicle which characteristics are described in the claims.

This invention will be better explained by the following detailed descriptions with reference to the accompanying figure as non-limiting example, wherein:
- figure 1 is a schematic plan view of the engine compartment of a motor vehicle according to this invention,
- figure 2 is a schematic, prospective, partially exploded view of the part shown by arrow II in figure 1,
- figure 3 is a schematic lateral view of the vehicle in figure 1,
- figure 4 is a prospective view of the air flow conveyor manifold shown by arrow III in figure 2,
- figure 5 is a prospective view from a different angle of the manifold shown in figure 4,
- figure 6 is a schematic plan view of the motor vehicle according to this invention,
- figure 7 is a prospective view schematically illustrating a conveyor manifold which upper part is fastened to the engine bonnet,
- figure 8 is a schematic plan view illustrating an auxiliary thermal component arranged in the conveyor manifold and
- figure 9 is a blown-up schematic view of the part shown by the arrow IX in figure 8.

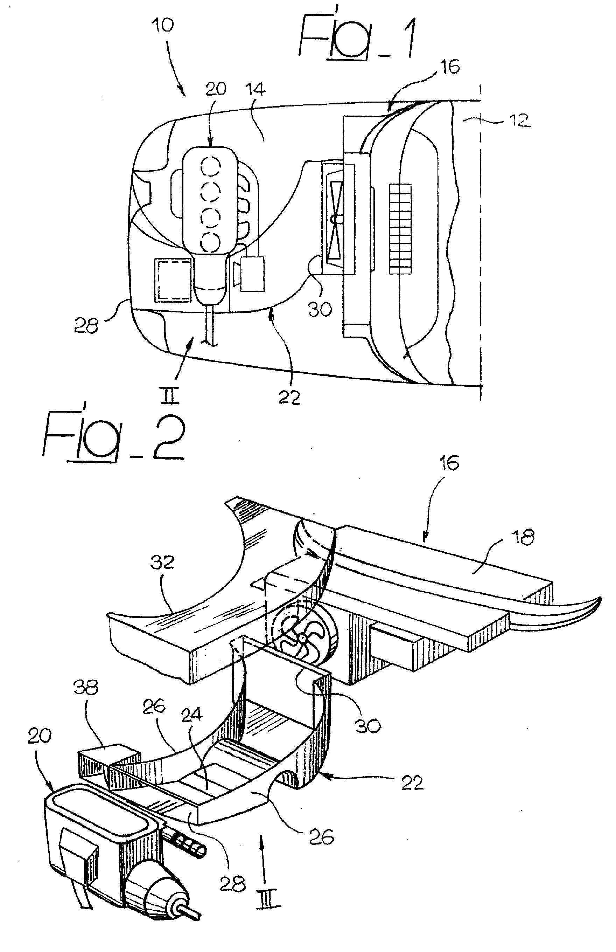

With reference to figures 1, 3 and 7, number 10 indicates the front part of a motor vehicle comprising a passenger compartment 12 and a front compartment 14, arranged in front of the passenger compartment 12. In the example shown in the figures, the engine is fitted in the front of the vehicle 10. Consequently, the compartment 14 contains the engine-gearbox assembly and all the engine accessory devices. This invention can also be applied to vehicles which engine is fitted in central position or in rear position, in which case the compartment 14 becomes a boot.

The vehicle 10 comprises a pre-assembled heat exchanger unit 16 which can be, for example, of the type described in Italian patent application TO99A000124. The heat exchanger unit 16 comprises an external casing 18 to which the components of the internal combustion engine cooling system of the motor vehicle are connected, along with the components of an air flow conditioning/heating system destined to be conveyed into the passenger compartment of the motor vehicle. The heat exchanger unit 16 is housed in the rear part of the front compartment 14 and is arranged in the area separating the passenger compartment 12 from the front compartment 14. The heat exchanger unit 16 is, consequently, arranged behind the engine-gearbox assembly, indicated by number 20 in the figures.

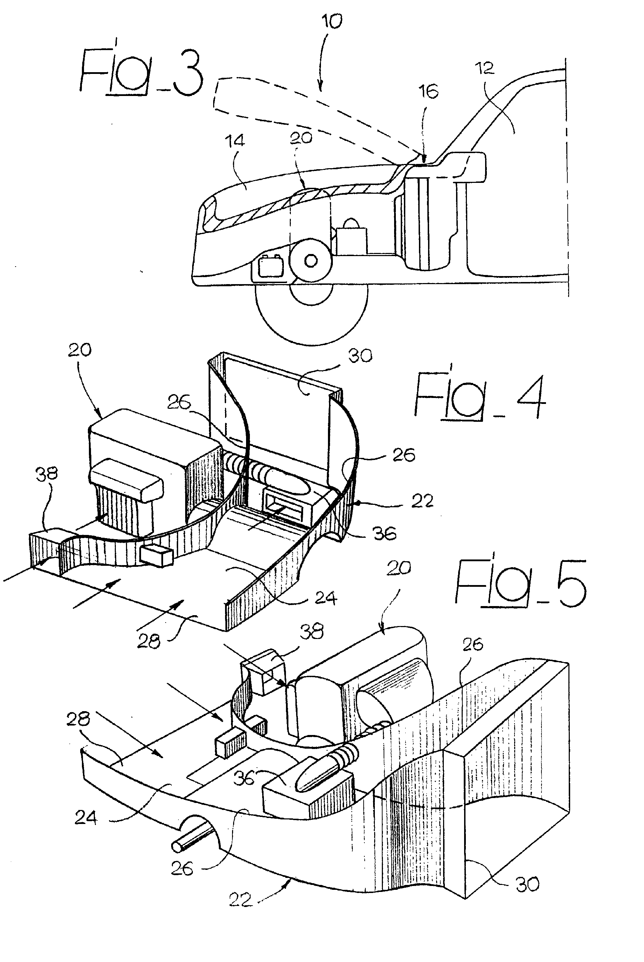

With reference to figures 2, 4, and 5, the motor vehicle according to this invention is equipped with a manifold 22 for conveying a flow of air from the front of the motor vehicle towards the heat exchanger unit 16. The manifold 22 is a variable cross-section plastic material structure with a bottom face 24 and two side faces 26. The manifold 22 has an inlet opening 28, facing the front part of the motor vehicle, and an outlet opening 30, facing the radiator-condenser unit of the heat exchanger 16. The manifold 22 extends laterally with respect to the engine 20 and passes over the gearbox. Preferably, the manifold 22 has an upper closing face 32 which is fastened to the lower side of the engine bonnet 34. In this way, when the bonnet is closed, the upper part of manifold 26 is closed by face 32 so to form a continuous closed duct between the inlet section 28 and the outlet section 30. The fact that the upper face 32 of the manifold 22 is fastened to the engine bonnet 34 allows to inspect the internal part of the manifold 22 without needing to dismantle it.

The manifold 22 according to this invention allows to convey a flow of air to the heat exchanger unit 16 which reaches the heat exchanger unit without being heated despite its crossing the engine compartment (in the case in which the engine is fitted in the front of the vehicle). Either the manifold can be equipped with access openings, which may be closed by flaps, or the upper part of the manifold can be fastened to the bonnet so to allow to inspect the gearbox controls, the spark distributor cap, the level of brake oil and other fluid levels in the area surrounding the manifold.

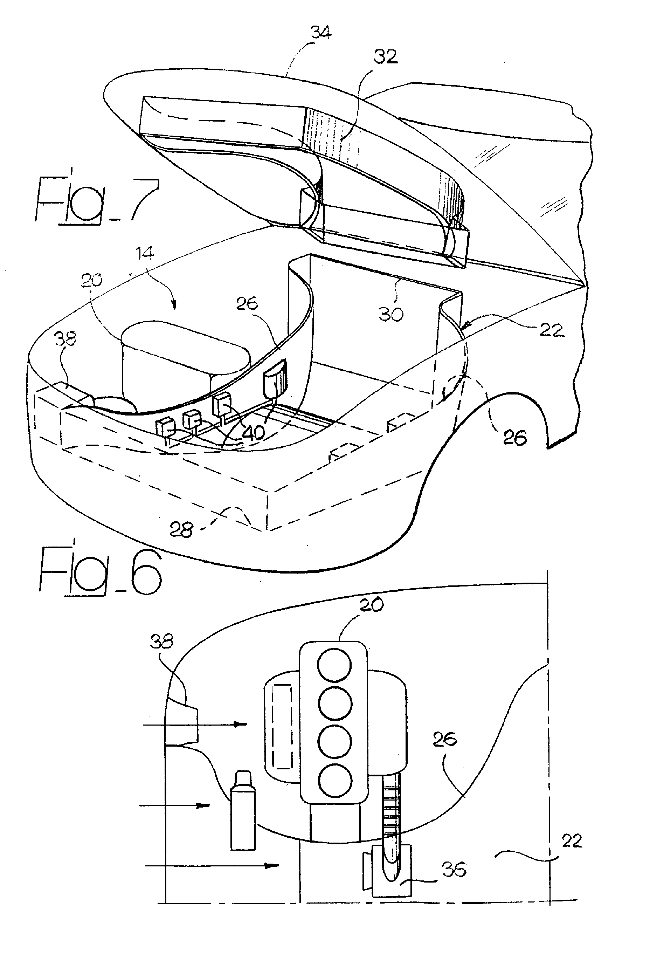

As shown in figures 4, 5 and 6, the manifold 22 preferably contains the box 36 of the air cleaner of the internal combustion engine. Said box takes the air from the front part of the vehicle via the manifold 22. The fact that the air cleaner is inside the manifold 22 allows to distance the engine intake noise from the passenger compartment and take it to the front part of the motor vehicle.

The battery of the motor vehicle can be arranged near the gearbox so to be invested in part by the flow of air crossing the manifold 22. This arrangement tends to keep the battery temperature constant. This is because, the speed of the air flow, which reaches and cools the battery, increases as the speed of the vehicle increases and the gearbox oil temperature increases proportionally whereby heating the battery. The speed of the air flow which cools the battery decreases as the vehicle speed decreases and so does the heat that the battery receives from the gearbox.

The arrangement of the heat exchanger unit in the rear part of the engine compartment ensures that there are no heat exchangers or fans conveying air onto the exhaust gas manifold in the front part of the engine. Consequently, a calibrated passage of air 38 can be arranged in the front part of manifold 22, which produces a flow of air directed onto the catalytic converter. The passage of air 38 can be dimensioned to allow the catalytic converter to be remain at a temperature which is essentially constant, for example in the order of 800°C. The passage of air 38 could also be associated to a thermostatic device. The heat guards which are required in the current solutions to shield the spokes of the air manifold and the fan motor from the heat produced by the catalytic converter are no longer required.

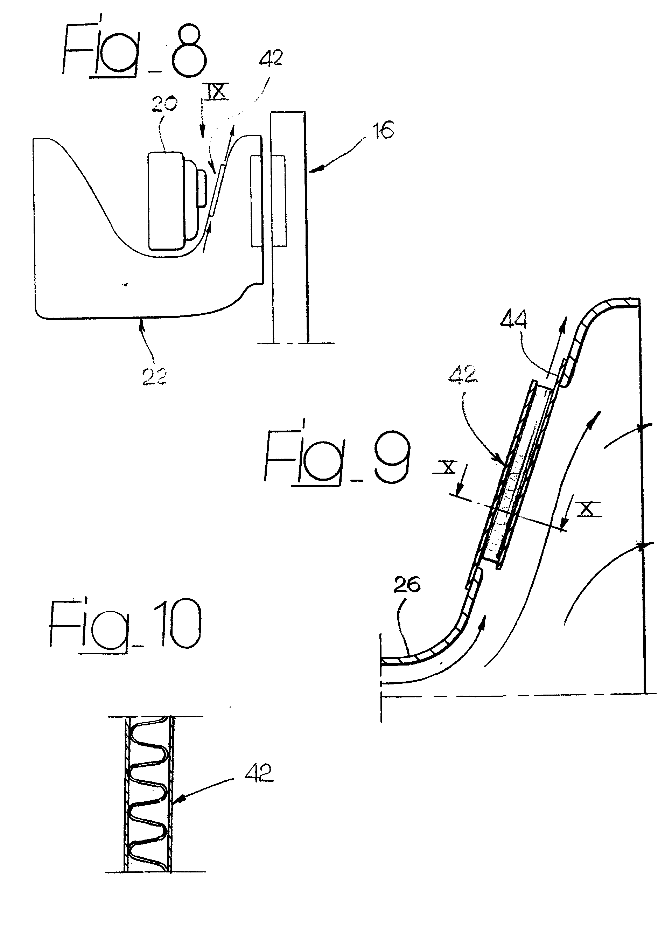

As schematically shown in figure 7, the manifold 22 according to this invention can also be used to support control units, wiring harnesses, co-moulded wiring, fluid containers, etc., generally indicated by reference number 40. Said components can be easily pre-assembled outside the vehicle assembly line and can be kept at working temperatures in the order of 40-50°C, which is considerably lower than the temperatures which they are normally subjected to when they are arranged inside the engine compartment (80-120°C).

The manifold 22 can be made at least in part by a face equipped with a cavity inside which air circulates during use. This manufacturing solution can be used especially for the sides which are facing particularly hot components, such as, for example, the catalytic converter when arranged behind the engine to prevent heating the flow of air passing inside manifold 22.

In figures 8 and 9, number 42 schematically indicates an intercooler heat exchanger which can equip the internal combustion engine for cooling the air taken into the engine downstream to a compressor. In the cases in which an intercooler heat exchanger is fitted, this can be arranged as shown in figures 8 and 9 so that it is invested by a part of the flow of air which crosses the manifold 22. Preferably, the flow of air which invests the intercooler 42 is evacuated outside the manifold 22 through an opening 44 to prevent directly heating the air directed to the radiator-condenser unit.

## Claims

1. Motor vehicle comprising a passenger compartment (12), a front compartment (14), which is arranged in the front of the passenger compartment (12), and a heat exchanger unit (16), comprising an engine cooling radiator arranged in the area separating the passenger compartment (12) from the front compartment (14),
**characterised in that** it comprises a manifold for conveying a flow of air (22), with an air flow inlet section (28) arranged in front part of the motor vehicle and an air flow outlet section (30) arranged in the rear part of the front compartment (14), in correspondence to said heat exchanger unit (16).

2. Motor vehicle according to claim 1 **characterised in that** said manifold (22) comprises a hollow variable cross-section structure comprising a bottom face (24) and a pair of side faces (22).

3. Motor vehicle according to claim 2 **characterised in that** said manifold (22) comprises an upper closing face (32) which is fastened to the lid (34) of the engine compartment/boot (14).

4. Motor vehicle according to claim 2 **characterised in that** said manifold (22) comprises an upper closing face which is fastened to said side faces.

5. Motor vehicle according to claim 1 **characterised in that** said manifold (22) extends laterally to the engine of the vehicle and over the gearbox.

6. Motor vehicle according to claim 1 **characterised in that** it comprises a box (36) for the engine air cleaner (20) which is arranged inside said manifold (22).

7. Motor vehicle according to claim 1 **characterised in that** it comprises a set of electric and/or electronic devices (40) supported by said manifold (22) and exposed to the flow of cooling air passing through said manifold (22).

8. Motor vehicle according to claim 1 **characterised in that** it comprises a battery arranged so to be cooled by the flow of air passing through said manifold (22).

9. Motor vehicle according to claim 1 **characterised in that** said manifold (22) comprises a calibrated air passage (38) for conveying a flow of air onto the internal combustion engine exhaust pipe.

10. Motor vehicle according to claim 1 **characterised in that** it comprises an intercooler heat exchanger (42) which is arranged so to be invested on one side by the flow of air passing through said manifold (22), said intercooler radiator (42) being arranged in correspondence to an opening (44) for evacuating the air from of air crossing said intercooler (42) outside the manifold (22).
